# EUROPÄISCHE PATENTSCHRIFT

(11) **EP 2 992 737 B1**
(45) Veröffentlichungstag und Bekanntmachung des Hinweises auf die Patenterteilung: **02.01.2019**
(21) Anmeldenummer: 14731541.0
(22) Anmeldetag: 30.04.2014
(51) Int. Cl.: H05B 33/08

(54) **BETRIEBSGERÄT FÜR LEUCHTMITTEL**
OPERATING DEVICE FOR LUMINOUS ELEMENTS
BALLAST POUR MOYEN D'ÉCLAIRAGE

(30) Priorität: 02.05.2013 AT 1602013 U
(43) Veröffentlichungstag der Anmeldung: 09.03.2016
(73) Patentinhaber: Tridonic GmbH & Co. KG, 6851 Dornbirn (AT)
(72) Erfinder: Wynnyczenko, Oliver, 6890 Lustenau (AT)
(74) Vertreter: Rupp, Christian
(86) Internationale Anmeldenummer: PCT/AT2014/000102
(87) Internationale Veröffentlichungsnummer: WO 2014/176615

(56) Entgegenhaltungen:
- CN-A- 103 065 773
- CN-U- 202 310 246
- GB-A- 1 308 133
- US-A1- 2008 278 229
- US-A1- 2013 049 589

## Beschreibung

Die Erfindung betrifft Betriebsgeräte für Leuchtmittel. Die Erfindung betrifft insbesondere Betriebsgeräte, bei denen das Betriebsgerät ein Funkentstörelement aufweist.

Energiesparende Leuchten können Leuchtdioden (LEDs) als Leuchtmittel verwenden. Derartige Leuchtmittel können auch durch kleine Ströme zum Leuchten angeregt werden. Gemäß dem Stand der Technik werden bereits Betriebsgeräte für Leuchtmittel mit Filterschaltungen eingesetzt, jedoch benötigen diese immer noch einen relativ großen Filter am Eingang.

Bei dem Stand der Technik kann es sowohl bei Messungen der leitungsgebundenen und auch abgestrahlten Störaussendungen auch vorkommen, dass die erlaubten Grenzwerte überschritten werden. Insbesondere können auch Störaussendungen aufgrund einer vorhandenen Potentialtrennung innerhalb des Betriebsgerätes auftreten.

Die folgenden Druckschriften der Patentliteratur offenbaren weiteren technologischen Hintergrund für die vorliegende Erfindung:

| | | |
|---|---|---|
| D1 | = | US 2008/278229 A1 |
| D2 | = | GB 1 308 133 A |
| D3 | = | CN 202 310 246 U |
| D4 | = | CN 103 065 773 A |
| D5 | = | US 2013/049589 A1 |

Die Druckschrift D1 zeigt ein Betriebsgerät zum Betreiben einer Leuchte mit einem Primärkreis und einem Sekundärkreis, die galvanisch über einen Transformator entkoppelt sind. Zur Spannungsstabilisation ist die Sekundärspule über einen Widerstand mit Masse gekoppelt. Über eine Rückkopplungswiderstand zum Primärkreis wird eine Verbindung mit einem im Primärkreis liegenden Operationsverstärker über einen weiteren Widerstand hergestellt.

Die weiteren Druckschriften D2-D5 offenbaren weitere Betriebsgeräte zur Ansteuerung von Lampen bzw. Leuchten.

Aufgabe der Erfindung ist, ein Betriebsgerät für ein Leuchtmittel bereitzustellen, mit dem Störungen durch das Betriebsgerät wirksam unterdrückt, d.h. reduziert, werden können.

Diese Aufgabe wird gelöst durch ein Betriebsgerät mit den im unabhängigen Anspruch angegebenen Merkmalen. Die abhängigen Patentansprüche definieren Weiterbildungen der Erfindung.

Ein Betriebsgerät für ein Leuchtmittel nach einem Ausführungsbeispiel umfasst ein Funkentstörelement und ein Filter zum Unterdrücken von Störungen, das mit dem Funkentstörelement gekoppelt ist. Es kann auch eine Einrichtung zum Unterdrücken von Glimmen vorhanden sein, die das Glimmen reduzieren oder vollständig eliminieren kann. Diese Einrichtung zum Unterdrücken von Glimmen wird im Folgenden auch als Anti-Glimm-Einrichtung bezeichnet.

Durch das Filter in dem Betriebsgerät können Störungen, die beispielsweise durch die von dem Betriebsgerät erzeugten Schaltflanken verursacht werden, verringert werden. Entsprechend können auch die ausgesendeten Störungen, die durch das Betriebsgerät hervorgerufen werden können, verringert werden. Die erfindungsgemäße Ausgestaltung erlaubt auch ein Dimmen, beispielsweise durch Pulsweitenmodulation.

Das Filter kann zwischen das Funkentstörelement und eine Masse geschaltet sein. Das Filter kann eine Transferfunktion aufweisen, deren Betrag bei einer Versorgungsspannungsfrequenz der Versorgungsspannung des Betriebsgeräts kleiner ist als bei Frequenzen im Funkentstörbereich. Das Filter kann eine Induktivität umfassen, die mit einem Funkentstörkondensator gekoppelt ist.

Das Filter kann als Element mit einer frequenzabhängigen Impedanz ausgestaltet sein. Das Element mit der frequenzabhängigen Impedanz kann bei der Versorgungsspannungsfrequenz des Betriebsgeräts eine betragsmäßig geringere Impedanz aufweisen als für eine Frequenz im Funkentstörbereich. Das Filter kann eine Induktivität oder auch ein anderes frequenzabhängiges Bauteil umfassen.

Das Betriebsgerät kann eine Primärseite und eine Sekundärseite aufweisen. Das Funkentstörelement kann ein Funkentstörkondensator zwischen der Primärseite und der Sekundärseite sein.

Das Filter ist in Serie zu dem Funkentstörkondensator geschaltet. Beispielsweise kann eine Störung dadurch entstehen, dass durch eine Koppelkapazität zwischen einem LED-Modul und einem geerdeten Leuchtengehäuse Ableitströme bei der Versorgungsspannungsfrequenz auftreten. Ein entsprechender Stromkreis kann gebildet werden durch die Spannung zwischen Phasenleiter und Masse an einer Primärseite des Betriebsgeräts, durch den Funkentstörkondensator und eine Koppelkapazität zwischen dem LED-Modul und Erde.

Das Filter und das Funkentstörelement sind in einer Serienschaltung angeordnet. Diese Serienschaltung aus Filter und Funkentstörelement ist zwischen der Masse der Primärseite und der Masse der Sekundärseite angeordnet.

Das Betriebsgerät kann einen Erdanschluß aufweisen. Es kann eine Serienschaltung aus einem Filterkondensator und einer Funkentstördrossel zwischen dem Erdanschluß und der Masse der Sekundärseite (im folgenden auch als sekundärseitige Masse bezeichnet) angeordnet sein.

Zwischen dem Erdanschluß und dem Massepotential der Primärseite kann ein Sicherheitskondensator angeordnet sein.

Durch die optionale Anti-Glimm-Einrichtung kann der Funkentstörkondensator selektiv weggeschaltet und dieser Stromkreis unterbrochen werden, um das Glimmen des Leuchtmittels zu verringern oder vollständig zu eliminieren. Durch eine derartige Ausgestaltung kann der Strom zum oder vom Funkentstörelement abhängig von einer Signalform geleitet oder unterbrochen werden. Im Standby-Modus des Betriebsgeräts treten keine oder nur sehr geringe vom Betriebsgerät verursachte Störungen aufgrund von Schaltflanken auf, somit ist in diesem Betriebsmodus keine Entstörung erforderlich. Wenn die Leuchte eingeschaltet ist, können Signale bei Frequenzen, die im Funkentstörbereich liegen, von dem Funkentstörelement gegen Masse geleitet werden. Das Filter kann eine Diode mit hoher Sperr-Erholzeit umfassen oder als solche Diode ausgestaltet sein.

Die optionale Anti-Glimm-Einrichtung kann eingerichtet sein, um einen Stromfluss zu oder von dem Funkentstörelement zu beeinflussen. Die Anti-Glimm-Einrichtung kann eingerichtet sein, um den Stromfluss zu oder von dem Funkentstörelement betriebszustandsabhängig zu beeinflussen. Die Anti-Glimm-Einrichtung kann eingerichtet sein, um einen Stromfluss zwischen dem Funkentstörelement und einer Masse zu verringern, wenn sich das Betriebsgerät in einem Standby-Modus befindet und/oder wenn die Leuchte ausgeschaltet ist.

Die Anti-Glimm-Einrichtung kann ein steuerbares Schaltmittel umfassen, das zwischen das Funkentstörelement und eine Masse geschaltet sein. Die Anti-Glimm-Einrichtung kann in Serie zu dem Funkentstörelement geschaltet sein. Das Schaltmittel kann einen Transistor, beispielsweise einen Feldeffekttransistor (FET), umfassen.

Das Betriebsgerät kann so eingerichtet sein, dass das steuerbare Schaltmittel betriebszustandsabhängig in einen Ein-Zustand und/oder einen Aus-Zustand geschaltet wird. Das Betriebsgerät kann so eingerichtet sein, dass das steuerbare Schaltmittel zwischen dem Funkentstörelement und der Masse in einen Aus-Zustand geschaltet wird, wenn die Leuchte ausgeschaltet ist und/oder sich das Betriebsgerät in einem Standby-Modus befindet. Das Betriebsgerät kann so eingerichtet sein, dass das steuerbare Schaltmittel zwischen dem Funkentstörelement und der Masse in einen Ein-Zustand geschaltet wird, wenn die Leuchte eingeschaltet ist.

Das steuerbare Schaltmittel kann mit einem Mikrocontroller, einem Controller oder einem Prozessor oder einer anderen integrierten Halbleiterschaltung gekoppelt sein, der bzw. die an einer Sekundärseite des Betriebsgeräts vorgesehen ist.

Das steuerbare Schaltmittel kann so verschaltet sein, dass es von dem Mikrocontroller, dem Controller, dem Prozessor oder der anderen integrierten Halbleiterschaltung selektiv in einen Ein-Zustand geschaltet wird. Dadurch kann sichergestellt werden, dass das Funkentstörelement weggeschaltet wird, wenn das Betriebsgerät in einem Standby-Modus ist und der Mikrocontroller auf der Sekundärseite nicht mit Energie versorgt wird. Alternativ oder zusätzlich kann das steuerbare Schaltmittel von einer Spannung einer Sekundärseite des Betriebsgeräts in einen Ein-Zustand geschaltet zu werden.

Das Filter kann auf der Sekundärseite des Betriebsgeräts angeordnet sein. Das Filter kann zwischen einem Funkentstörkondensator und einer Masse der Sekundärseite des Betriebsgeräts vorgesehen sein.

Das Betriebsgerät kann als isolierter LED-Konverter ausgestaltet sein.

Nach einem weiteren Ausführungsbeispiel wird ein Beleuchtungssystem angegeben. Das Beleuchtungssystem umfasst ein Betriebsgerät nach einem Ausführungsbeispiel der Erfindung. Das Beleuchtungssystem umfasst eine mit dem Betriebsgerät verbundene Versorgungsquelle sowie ein mit dem Betriebsgerät verbundenes Leuchtmittel.

Nach einem weiteren Beispiel wird ein Verfahren zum Unterdrückung von Störungen durch das Betriebsgerät angegeben. Das Leuchtmittel ist mit einem Betriebsgerät gekoppelt, das ein Funkentstörelement aufweist. Das Verfahren umfasst ein Beeinflussen eines Stromflusses zu oder von dem Funkentstörelement abhängig von einem Betriebszustand des Betriebsgeräts und/oder abhängig von einer Signalfrequenz.

Zusätzliche Merkmale des Verfahrens nach Ausführungsbeispielen und die damit jeweils erzielten Wirkungen entsprechen den zusätzlichen Merkmalen von Betriebsgeräten nach Ausführungsbeispielen.

Weitere Merkmale, Vorteile und Funktionen von Ausführungsbeispielen der Erfindung werden aus der nachfolgenden detaillierten Beschreibung anhand der beigefügten Zeichnungen ersichtlich, in denen gleiche oder ähnliche Bezugszeichen Einheiten mit gleicher oder ähnlicher Funktion bezeichnen.
Fig. 1 zeigt ein Beleuchtungssystem mit einem Betriebsgerät für ein Leuchtmittel nach einem Ausführungsbeispiel der Erfindung.
Fig. 2 ist eine Blockdarstellung eines Betriebsgeräts nach einem Ausführungsbeispiel.
Fig. 3 ist ein Schaltbild einer Filter-Einrichtung für ein Betriebsgerät nach einem Ausführungsbeispiel.
Fig. 4 ist ein Schaltbild eines Betriebsgeräts mit einer Filter-Einrichtung nach einem Ausführungsbeispiel.
Fig. 5 ist ein Schaltbild einer Filter-Einrichtung für ein Betriebsgerät nach einem Ausführungsbeispiel.
Fig. 6 illustriert eine beispielhafte Impedanz eines Filters der Filter-Einrichtung für ein Betriebsgerät nach einem Ausführungsbeispiel.
Fig. 7 ist ein Flussdiagramm eines Verfahrens nach einem Beispiel.
Fig. 8 ist ein Schaltbild einer Filter-Einrichtung für ein Betriebsgerät nach einem Ausführungsbeispiel.

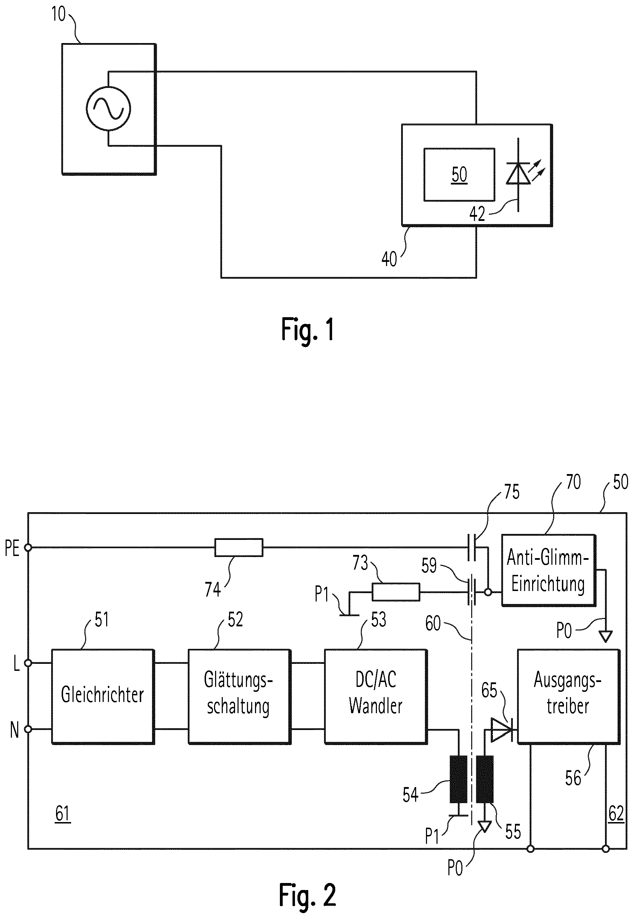

Fig. 1 veranschaulicht ein Beleuchtungssystem mit einem Betriebsgerät für ein Leuchtmittel nach einem Ausführungsbeispiel der Erfindung. Das Beleuchtungssystem umfasst eine Versorgungsquelle 10, beispielsweise eine Netzspannungsquelle, und eine Leuchte 40 oder mehrere Leuchten 40. Die Leuchte 40 weist ein Betriebsgerät 50 nach einem Ausführungsbeispiel und ein Leuchtmittel 42 auf. Das Leuchtmittel 42 kann eine oder mehrere Leuchtdioden (LEDs) umfassen. Entsprechend kann das Betriebsgerät 50 als LED-Konverter ausgestaltet sein. Das Leuchtmittel 42 kann auf verschiedene Weisen implementiert sein, beispielsweise durch eine oder mehrere anorganische LEDs, organische LEDs, andere Leuchtmittel oder eine Kombination der genannten Leuchtmittelarten. Über das Betriebsgerät 50 erfolgt ein geeigneter Betrieb des jeweiligen Leuchtmittels 42. Zu diesem Zweck kann das Betriebsgerät 50 beispielsweise ein Netzteil umfassen, welches aus einer der Leuchte 40 zugeführten Versorgungsspannung eine geeignete Spannung und/oder einen geeigneten Strom zum Betrieb des Leuchtmittels 42 erzeugt. Ein Gehäuse der Leuchte 40 kann geerdet sein.

Wie unter Bezugnahme auf Fig. 2 bis Fig. 7 noch ausführlicher beschrieben wird, weist das Betriebsgerät 50 ein Funkentstörelement und ein Filter zur Unterdrückung von Störungen sowie optional eine Anti-Glimm-Einrichtung zum Unterdrücken von Glimmen auf.

Fig. 2 ist eine Blockdiagrammdarstellung eines Betriebsgeräts 50 nach einem Ausführungsbeispiel. Das Betriebsgerät 50 kann als Konstantstromquelle oder als Konstantspannungsquelle arbeiten. Das Betriebsgerät 50 kann ein LED-Konverter sein. Das Betriebsgerät 50 kann ein isolierter LED-Konverter sein.

Das Betriebsgerät 50 weist eingangsseitig einen Gleichrichter 51 auf. Dem Gleichrichter 51 ist vorzugsweise ein Netzfilter (nicht dargestellt) vorgeschaltet. Das Netzfilter kann beispielsweise aus einem LC-Filter oder CLC-Filter gebildet werden. Die gleichgerichtete Versorgungsspannung am Eingang des Betriebsgeräts kann von einer Glättungsschaltung 52 (auch als Leistungsfaktorkorrekturschaltung oder PFC-Schaltung bezeichnet) geglättet werden. Durch die Glättungsschaltung 52 kann eine Leistungsfaktorkorrektur derart erfolgen, dass die gesamte harmonische Verzerrung (THD) verringert und der Leistungsfaktor erhöht wird. Ein Gleichstrom-Wechselstrom-Wandler 53 kann von einer Steuereinrichtung, beispielsweise einem Mikrocontroller, Controller, Prozessor oder einer anderen integrierten Halbleiterschaltung auf einer Primärseite des Betriebsgeräts, gesteuert werden. Der Gleichstrom-Wechselstrom-Wandler 53 kann einen LLC-Resonanzwandler, einen Sperrwandler oder eine andere Wandlertopologie aufweisen. Das Betriebsgerät kann einen Transformator mit einer primärseitigen Spule 54 und einer damit induktiv gekoppelten sekundärseitigen Spule 55 umfassen. Die primärseitige Spule 54 ist an einer Primärseite 61 des Betriebsgeräts 50 angeordnet. Die sekundärseitige Spule 55 ist an einer Sekundärseite 62 des Betriebsgeräts 50 angeordnet. Der Transformator kann eine galvanische Trennung herstellen. Die Sekundärseite 62 kann eine SELV ("safety extra-low voltage")-Seite des Betriebsgeräts sein, die durch eine SELV-Barriere 60 oder andere galvanische Trennung von der Primärseite 61 getrennt ist. Auf die sekundärseitige Spule 55 folgt vorzugsweise ein Ausgangsgleichrichter, beispielsweise ein Einweggleichrichter 65 oder eine Diodenbrücke. Dieser Ausgangsgleichrichter kann auch als aktiver Gleichrichter ausgebildet sein. Der Gleichstrom-Wechselstrom-Wandler 53, der Transformator mit der primärseitigen Spule 54 und der damit induktiv gekoppelten sekundärseitigen Spule 55 und der Ausgangsgleichrichter bilden gemeinsam einen Gleichstrom-Gleichstrom-Wandler. Ein Ausgangstreiber 56 kann mit der sekundärseitigen Spule 55 gekoppelt sein. Ausgänge des Betriebsgeräts 50 können elektrisch leitend mit dem Leuchtmittel 42, beispielsweise mit einem LED-Modul, verbunden sein. Das Betriebsgerät 50 kann beispielsweise auch nur einen Gleichstrom-Gleichstrom-Wandler aufweisen, die Gleichrichter 51, die Glättungsschaltung 52 sowie der Ausgangstreiber 56 sind optionale Elemente, deren Funktion auch in den Gleichstrom-Gleichstrom-Wandler integriert sein kann.

Das Betriebsgerät 50 weist ein Funkentstörelement auf. Bei der dargestellten Ausgestaltung ist das Funkentstörelement als Funkentstörkondensator 59 ausgestaltet. Der Funkentstörkondensator 59 ist in Serie mit einem Filter 73 zwischen die Primärseite 61 und die Sekundärseite 62 geschaltet. Das Filter 73 ist mit dem Massepotential P1 der Primärseite 61 verbunden. Der Funkentstörkondensator 59 ist mit dem sekundärseitigen Massepotential P0 verbunden. Das Filter 73 und das Funkentstörelement 59 sind in einer Serienschaltung angeordnet, und diese Serienschaltung aus Filter 73 und Funkentstörelement 59 ist zwischen der Masse P1 der Primärseite 61 und der Masse P0 der Sekundärseite 62 angeordnet. Durch den Funkentstörkondensator 59 und das Filter 73 können zumindest im Nutzbetrieb, wenn die Leuchte 40 eingeschaltet ist, hochfrequente Störsignale von den Netz- und Lampenleitungen abgeleitet werden. Dadurch können beispielsweise elektromagnetische Störungen verringert werden. Die hochfrequenten Störsignale können beispielsweise aus dem Betrieb eines oder mehrerer Schaltregler, beispielsweise des Gleichstrom-Wechselstrom-Wandlers 53 oder anderer Komponenten des Betriebsgeräts 50, verursacht werden. Weiterhin weist das Betriebsgerät 50 eine Funkentstördrossel 74 auf, die einerseits mit dem Erdanschluß PE für die Schutzerdung und andererseits über einen Filterkondensator 75 mit dem sekundärseitigen Massepotential P0 des Betriebsgerätes verbunden ist.

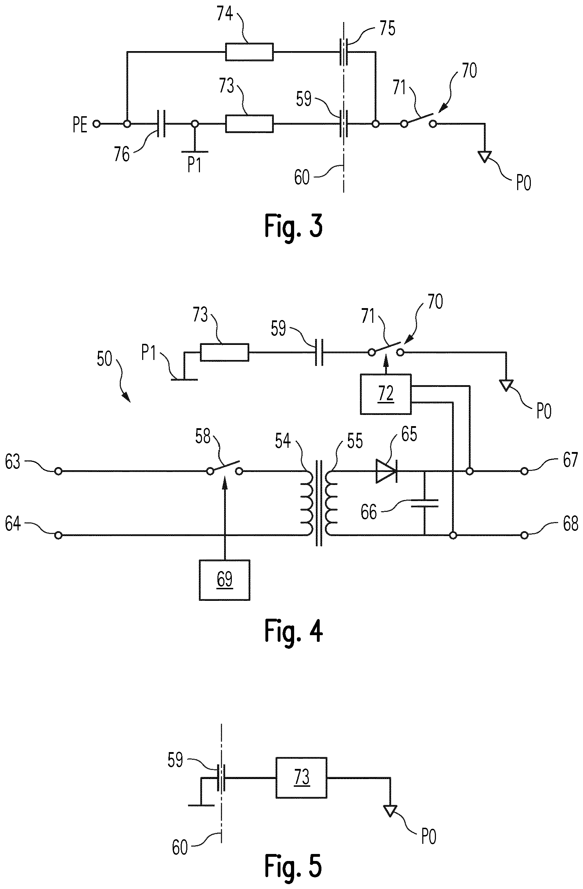

Das Betriebsgerät 50 weist wie bereits erwähnt ein Filter 73 und optional eine Anti-Glimm-Einrichtung 70 auf. Das Filter 73 ist mit dem Funkentstörelement 59 gekoppelt. Die Funktion des Filter 73 wird anhand des Beispiels der Fig. 5 genauer beschrieben. Die Anti-Glimm-Einrichtung 70 ist mit dem Funkentstörelement gekoppelt. Das Filter 73 und die Anti-Glimm-Einrichtung 70 können eingerichtet sein, um Ströme zwischen dem Funkentstörelement und einem sekundärseitigen Massepotential P0 zu beeinflussen, beispielsweise selektiv zu sperren. Dies kann abhängig von einem Betriebszustand der Leuchte oder des Betriebsgeräts erfolgen. Alternativ oder zusätzlich kann der Stromfluss zwischen dem Funkentstörelement und einem sekundärseitigen Massepotential P0 frequenzabhängig gesperrt werden. Das Filter 73 kann so ausgestaltet sein, dass es zumindest dann, wenn sich das Betriebsgerät 50 im Nutzbetrieb befindet, hochfrequente Störungen, die von dem Betriebsgerät erzeugt werden wird, dämpfen. Das Filter 73 kann beispielsweise so ausgestaltet sein, dass zumindest dann, wenn die Leuchte 40 eingeschaltet ist, Ströme bei einer Funkentstörfrequenz zwischen dem Funkentstörelement 59 und dem sekundärseitigen Massepotential P0 gedämpft werden können.

Unter Bezugnahme auf Fig. 3 bis Fig. 7 werden Ausgestaltungen des Filters sowie der optionalen Anti-Glimm-Einrichtung 70 bei Betriebsgeräten nach Ausführungsbeispielen näher beschrieben.

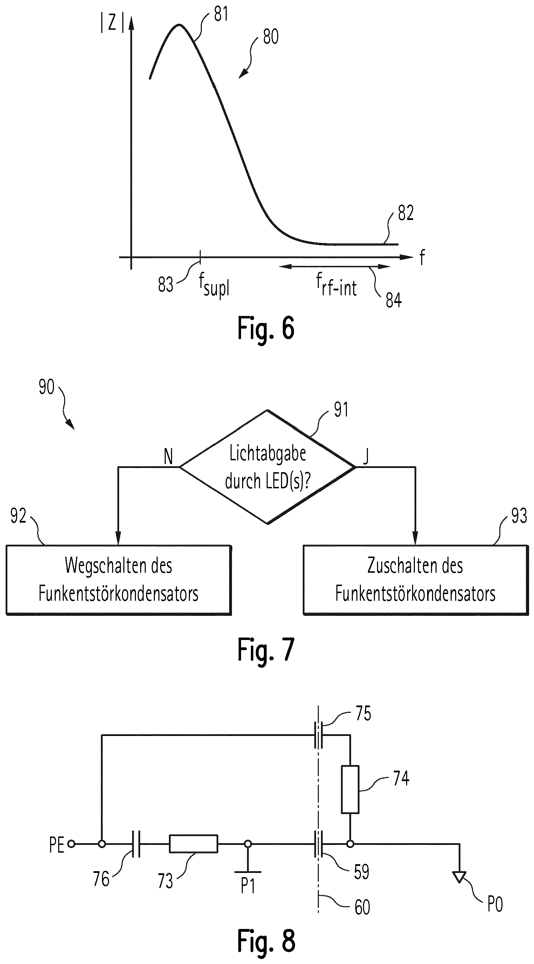

Fig. 3 ist ein Schaltbild einer Filter-Einrichtung mit dem Filter 73 und einer optionalen Anti-Glimm-Einrichtung 70 bei einem Betriebsgerät nach einem Ausführungsbeispiel. Die Anti-Glimm-Einrichtung 70 umfasst ein Schaltmittel 71. Das Schaltmittel 71 kann auf der Sekundärseite 62 des Betriebsgeräts angeordnet sein. Das Schaltmittel 71 kann einen Transistor, beispielsweise ein FET oder einen anderen Leistungsschalter, umfassen. Das Schaltmittel 71 kann den Funkentstörkondensator 59 leitend mit einem sekundärseitigen Massepotential P0 verbinden, wenn es in einen Ein-Zustand geschaltet ist. Der Funkentstörkondensator 59 ist in Serie mit einem Filter 73 verbunden, vorzugsweise ist das Filter 73 primärseitig angeordnet, es kann aber auch sekundärseitig angeordnet sein. Weiterhin ist eine Funkentstördrossel 74 vorhanden, die einerseits mit dem Erdanschluß PE für die Schutzerdung und andererseits über einen Filterkondensator 75 mit dem sekundärseitigen Massepotential P0 des Betriebsgerätes verbunden ist. Die Funkentstördrossel 74 kann auch auf der Sekundärseite 62 angeordnet sein, wie dies beispielsweise im Beispiel der Fig. 8 erläutert ist. Zwischen dem Erdanschluß PE für die Schutzerdung und dem Massepotential P1 der Primärseite 61 kann ein Sicherheitskondensator 76 angeordnet sein, der zum Verringern von Störungen des Betriebsgerätes 50 dient. Auch der Sicherheitskondensator 76 kann hochfrequente Störsignale gegen den Erdanschluß PE oder den Neutralleiter N leiten oder sie kurzschließen und bewirkt somit die Herabsetzung der elektromagnetischen Störungen.

Das Schaltmittel 71 kann so gesteuert werden, dass ein Widerstand des Schaltmittels 71 abhängig von einem Betriebszustand gesteuert wird. Der Widerstand des Schaltmittels 71 kann selektiv dann verringert werden, wenn die Leuchte 40 eingeschaltet ist und/oder wenn sich das Betriebsgerät 50 nicht in einem Standby-Modus befindet und Energie an das Leuchtmittel bereitstellt. Dadurch wird der Funkenstörkondensator 59 zugeschaltet, um Störsignale gegen das sekundärseitigen Massepotential P0 abzuleiten. Der Widerstand des Schaltmittels 71 kann selektiv dann erhöht werden, wenn die Leuchte 40 ausgeschaltet ist und/oder wenn sich das Betriebsgerät 50 in einem Standby-Modus befindet. Dadurch kann das Schaltmittel 71 in einen Aus-Zustand geschaltet werden. Der Funkenstörkondensator 59 kann so weggeschaltet werden, um ein Glimmen des Leuchtmittels zu unterdrücken oder eine Störeinkopplung über den Funkentstörkondensator 59 zu unterbinden.

Das Schaltmittel 71 kann so vorgesehen sein, dass es abhängig von einer Spannung oder einem Strom am Ausgang des Betriebsgeräts in den Ein-Zustand geschaltet wird. Dazu kann beispielsweise ein Gate des Schaltmittels 71 mit einer Betriebsspannung der Sekundärseite 62 gekoppelt sein.

Das Schaltmittel 71 kann so vorgesehen sein, dass es von einem Mikrocontroller, einem Controller, einem Prozessor oder einer anderen integrierten Halbleiterschaltung gesteuert wird. Ein Gate des Schaltmittels 71 kann mit einem Mikrocontroller gekoppelt sein, der auf der Sekundärseite 62 des Betriebsgeräts 50 angeordnet ist. Der Mikrocontroller kann mit der sekundärseitigen Spule 55 gekoppelt sein, um von dieser mit Energie versorgt zu werden. Entsprechend steuert der Mikrocontroller das Schaltmittel 71 nur dann so, dass es in einen Ein-Zustand geschaltet wird, wenn auch der Mikrocontroller der Sekundärseite mit Energie versorgt wird. Dadurch kann sichergestellt werden, dass das Funkentstörelement selektiv dann weggeschaltet wird, wenn die Leuchte ausgeschaltet ist und/oder das Betriebsgerät in einem Standby-Modus ist.

Fig. 4 zeigt eine Schaltungsanordnung von Komponenten eines Betriebsgeräts 50 nach einem Ausführungsbeispiel. Dabei ist zur Veranschaulichung ein Wandler mit einer Sperrwandlertopologie dargestellt. Der in diesem Ausführungsbeispiel dargestellte Wandler stellt ein Beispiel für einen Gleichstrom-Gleichstrom-Wandler dar. Andere Wandlertypen können verwendet werden. Bei dem Wandler wird ein Schaltmittel 58 betätigt, um Energie in der primärseitigen Spule 54 zu speichern (d.h. die primärseitige Spule 54 zu laden) oder um Energie von der primärseitigen Spule 54 zur sekundärseitigen Spule 55 zu übertragen (d.h. die primärseitige Spule 54 zu entladen). Das Schaltmittel 58 kann von einem Mikrocontroller 69 auf der Primärseite des Betriebsgeräts 50 gesteuert werden. Anstelle eines Mikrocontrollers 69 kann auch ein Controller, ein Prozessor oder eine andere integrierte Halbleiterschaltung verwendet werden. Das Schaltmittel 58 und der Mikrocontroller 69 bilden einen Gleichstrom-Wechselstrom-Wandler 53, der die primärseitige Spule 54 speist. Auf der Sekundärseite kann über eine Diode 65 als Ausgangsgleichrichter, die mit der sekundärseitigen Spule 55 verbunden ist, ein Ladekondensator 66 geladen werden. Über Ausgangsanschlüsse 67, 68 des Betriebsgeräts 50 kann Strom an das Leuchtmittel ausgegeben werden. Der Mikrocontroller 69 kann das Schaltmittel 58 so steuern, dass aus einer gleichgerichteten Versorgungsspannung an Eingängen 63, 64 des Wandlers ein Konstantstrom zur Versorgung von LEDs erzeugt wird. Der Funkentstörkondensator 59 ist in Serie mit einem Filter 73 verbunden, vorzugsweise ist das Filter 73 primärseitig angeordnet, es kann aber auch sekundärseitig angeordnet sein.

Ein weiterer Mikrocontroller 72 ist auf der Sekundärseite des Betriebsgeräts vorgesehen. Der weitere Mikrocontroller 72 kann von einer Betriebsspannung der Sekundärseite mit Energie versorgt werden. Der weitere Mikrocontroller 72 kann eingerichtet sein, um das Schaltmittel 71 von einem Aus-Zustand in einen Ein-Zustand zu schalten, wenn über die Ausgangsanschlüsse 67, 68 Energie für das Leuchtmittel bereitgestellt wird.

Der weitere Mikrocontroller 72 kann so eingerichtet sein, dass das Schaltmittel 71 in einen Aus-Zustand geschaltet ist, wenn die Leuchte ausgeschaltet ist und/oder sich das Betriebsgerät in einem Standby-Modus befindet.

Der weitere Mikrocontroller 72 ist von dem Mikrocontroller 69 der Primärseite getrennt und kann weitere Steuerfunktionen ausführen. Anstelle des Mikrocontrollers 72 kann auch ein Controller, ein Prozessor oder eine andere integrierte Halbleiterschaltung verwendet werden.

Fig. 5 ist ein Schaltbild mit einem Filter 73 bei einem Betriebsgerät nach einem weiteren Ausführungsbeispiel. Zusätzlich zu dem Filter 73 kann auch eine Anti-Glimm-Einrichtung 70 vorhanden sein, diese ist aber optional und daher in diesem Beispiel nicht abgebildet. Das Filter 73 kann auf der Sekundärseite 62 des Betriebsgeräts angeordnet sein. Das Filter 73 kann eingerichtet sein, um Signale abhängig von einer Signalform und insbesondere abhängig von einer Frequenz zu sperren. Das Filter 73 kann so eingerichtet sein, dass Signale, deren Frequenz einer Versorgungsspannungsfrequenz der von der Versorgungsquelle 10 bereitgestellten Spannung entsprechen, gedämpft werden. Derartige Signale können von dem Filter 73 gesperrt werden. Das Filter 73 kann optional eine Diode mit hoher Sperr-Erholzeit umfassen. Das Filter 73 kann eine Induktivität umfassen. Die Induktivität des Filters 73 kann abhängig von einer Kapazität des Funkentstörkondensators 59 so gewählt sein, dass Signale bei der Versorgungsspannungsfrequenz gedämpft werden.

Das Filter 73 kann so ausgestaltet sein, dass ein Betrag einer Impedanz des Filters 73 bei der Versorgungsspannungsfrequenz größer ist als ein Betrag der Impedanz des Filters 73 bei wenigstens einer Frequenz im Funkentstörbereich. Das Filter 73 kann so ausgestaltet sein, dass ein Betrag einer Impedanz des Filters 73 bei der Versorgungsspannungsfrequenz größer ist als ein Betrag der Impedanz des Filters 73 bei allen Frequenzen im Funkenstörbereich. Entsprechend kann das Filter 73 eine Übertragungsfunktion aufweisen, deren Betrag bei der Versorgungsspannungsfrequenz kleiner ist als bei Frequenzen im Funkentstörbereich. Durch das Filter 73 kann beispielsweise für Signale bei einer Netzfrequenz, die ein Glimmen des Leuchtmittels verursachen können, der Leitungspfad zwischen dem Funkentstörkondensator 59 und dem sekundärseitigen Massepotential P0 gesperrt werden. Aufgrund der kleineren Impedanz für höherfrequente Störsignale können derartige Störsignale über das Filter 73 gegen das sekundärseitigen Massepotential P0 abgeleitet werden. Dies kann beispielsweise dann erfolgen, wenn die Leuchte eingeschaltet ist und die Schaltregler des Betriebsgeräts 50 in Betrieb sind.

Die Induktivität des Filters 73 kann durch ein SMD Bauteil gebildet werden und vorzugsweise durch einen Bestückungsautomat auf der Platine des Betriebsgerätes bestückt werden. Die Induktivität des Filters 73 kann auch durch ein Radialbauteil bildet werden, welches vorzugsweise durch einen Bestückungsautomat auf der Platine des Betriebsgerätes bestückt werden kann. Der Funkentstörkondensator 59 und das Filter 73 oder Teile davon wie die Induktivität können auch in einem Hybridbauteil integriert sein.

Der Funkentstörkondensator 59 und das Filter 73 können eine Verringerung bzw. Kompensation der Störaussendungen durch das Betriebsgerät bewirken.

Die Verringerung bzw. Kompensation der Störaussendungen kann durch eine entsprechende Streuinduktivität der Induktivität des Filters 73 bewirkt werden. Die Verringerung bzw. Kompensation der Störaussendungen kann durch eine Resonanzwirkung der Funkentstörkondensator 59 und der Induktivität des Filters 73 bewirkt werden.

Das Filter 73 gemäß der Erfindung muß nicht mit der optionalen Anti-Glimm-Einrichtung 70 verbunden sein. Gemäß der Erfindung weist das Betriebsgerät 50 zumindest einen Funkentstörkondensator 59 und das Filter 73 auf. Diese beiden Komponenten dienen der Unterdrückung von Störungen. Die Anti-Glimm-Einrichtung 70 ist nur ein optionales Merkmal und nicht für die Unterdrückung von Störungen zwingend erforderlich.

Fig. 6 veranschaulicht beispielhaft den frequenzabhängigen Verlauf 80 des Betrags der Impedanz eines Filters 73, das bei Betriebsgeräten nach Ausführungsbeispielen verwendet werden kann. Das Filter weist bei einer Versorgungsspannungsfrequenz 83 eine Impedanz mit einem Betrag 81 auf. Dieser Wert ist größer als ein Betrag 82 der Impedanz des Filters 73 für Frequenzen in einem Funkentstörbereich 84.

Durch die erfindungsgemäße Serienschaltung aus einem Funkentstörkondensator 59 und Filter 73 kann das eingangsseitige Netzfilter (an den Netzanschlüssen) kleiner dimensioniert werden und die Störungen, die das Betriebsgerät 50 aussendet, können verringert werden. Auch der eingangsseitige Kondensator als Teil der eingangsseitigen Netzfilterschaltung kann kleiner dimensioniert werden.

Durch die Erfindung kann auf eine externe Beschaltung des Betriebsgerätes 50 mit zusätzlichen Filterbauteilen wie beispielsweise externen Drosseln verzichtet werden. Zudem bietet die Anordnung der Serienschaltung aus einem Funkentstörkondensator 59 und einem Filter 73 innerhalb des Betriebsgerätes 50 den Vorteil, dass diese Filterschaltung optimal auf das anzuschließende Leuchtmittel und dessen Nennleistung sowie auf die Betriebsfrequenz des Betriebsgerätes 50 eingestellt werden kann, und zwar schon bei der Fertigung des Betriebsgerätes 50.

Weiterhin ermöglicht die erfindungsgemäße Serienschaltung aus einer Funkentstörkondensator 59 und einem Filter 73 in dem Betriebsgerät 50 eine einfache Verdrahtung und Installation, da der Elektriker beim Anschließen keine externen Bauelemente mehr zusätzlich Anschließen oder Verdrahten muß und auch die Verdrahtung des Betriebsgerätes 50 einfacher gehalten ist.

Fig. 7 ist ein Flussdiagramm eines Verfahrens 90 nach einem Beispiel. Das Verfahren 90 kann von dem Betriebsgerät 50 nach einem Ausführungsbeispiel automatisch ausgeführt werden. Bei dem Verfahren kann ein Glimmen eines Leuchtmittels abhängig von einem Betriebszustand unterdrückt werden.

Bei Schritt 91 wird ermittelt, ob eine Lichtabgabe über LEDs erfolgt. Dazu kann ermittelt werden, ob die Leuchte eingeschaltet ist. Es kann eine Betriebsspannung an einer Sekundärseite des Betriebsgeräts überwacht werden. Andere Kriterien können überprüft werden um zu ermitteln, ob ein Glimmen der LEDs unterdrückt werden soll.

Bei Schritt 92 kann ein Funkentstörelement, beispielsweise ein Funkentstörkondensator, weggeschaltet werden, wenn Glimmen unterdrückt werden soll. Dies kann dadurch erreicht werden, dass ein Leitungspfad zwischen dem Funkentstörelement und einem Massepotential zumindest für Signale bei der Versorgungsspannungsfrequenz hochohmig ist. Ein Schaltmittel zwischen dem Funkentstörelement und dem Massepotential kann in einen Aus-Zustand geschaltet werden. Das Schaltmittel kann so ausgestaltet sein, dass es automatisch in einen sperrenden Zustand übergeht, wenn kein Steuersignal an einem Gate des Schaltmittels anliegt. Das Schaltmittel kann dadurch in den Aus-Zustand geschaltet werden, dass kein Steuersignal zum Steuern des Schaltmittels ausgesteuert wird.

Bei Schritt 93 kann das Funkentstörelement zugeschaltet werden, wenn das Glimmen des Leuchtmittels nicht unterdrückt werden muss, beispielsweise wenn die Leuchte eingeschaltet ist.

Dies kann dadurch erreicht werden, dass ein Leitungspfad zwischen dem Funkentstörelement und einem Massepotential zumindest für Frequenzen in einem Funkentstörbereich niederohmig ist. Ein Schaltmittel zwischen dem Funkentstörelement und dem Massepotential kann in einen Ein-Zustand geschaltet werden.

Fig. 8 ist ein Schaltbild mit einem Filter 73 bei einem Betriebsgerät nach einem weiteren Ausführungsbeispiel. Zusätzlich zu dem Filter 73 kann auch eine Anti-Glimm-Einrichtung 70 auf der Sekundärseite 62 vorhanden sein, diese ist aber optional und daher in diesem Beispiel nicht abgebildet. Das Filter 73 ist auf der Primärseite 61 des Betriebsgeräts angeordnet und in Serie mit einem einer Funkentstörkondensator 59 verbunden, der auf der Sekundärseite 62 mit dem sekundärseitigen Massepotential P0 verbunden ist. Das Filter 73 ist mit dem Massepotential P1 der Primärseite 61 verbunden. Das Filter 73 kann eingerichtet sein, um Signale abhängig von einer Signalform und insbesondere abhängig von einer Frequenz zu sperren. Mit dem Knotenpunkt von sekundärseitigem Massepotential P0 und Funkentstörkondensator 59 ist eine Funkentstördrossel 74 verbunden, die mit ihrem anderen Anschluß über einen Filterkondensator 75 mit dem Erdanschluß PE für die Schutzerdung des Betriebsgerätes verbunden ist. Die Funkentstördrossel 74 kann eingerichtet sein, um Signale abhängig von einer Signalform und insbesondere abhängig von einer Frequenz zu sperren. Es können also sowohl das Filter 73 als auch die Funkentstördrossel 74 zu einer Unterdrückung von hochfrequenten Störungen dienen. Zwischen dem Erdanschluß PE für die Schutzerdung und dem Massepotential P1 der Primärseite 61 ist ein Sicherheitskondensator 76 angeordnet, der zum Verringern von Störungen des Betriebsgerätes 50 dient. Auch der Sicherheitskondensator 76 kann hochfrequente Störsignale gegen den Erdanschluß PE oder den Neutralleiter N leiten oder sie kurzschließen und bewirkt somit die Herabsetzung der elektromagnetischen Störungen. In diesem Beispiel ist das Filter 73 zwischen dem Erdanschluß PE mit dem Sicherheitskondensator 76 und dem Massepotential P1 der Primärseite 61 angeordnet, diese Anordnung ist eine mögliche Alternative zu der Anordnung des Filters 73 zwischen dem Massepotential P1 der Primärseite 61 und dem Funkentstörkondensator 59.

Die Induktivität der Funkentstördrossel 74 kann durch ein SMD Bauteil gebildet werden und vorzugsweise durch einen Bestückungsautomat auf der Platine des Betriebsgerätes bestückt werden. Die Induktivität des Funkentstördrossel 74 kann auch durch ein Radialbauteil bildet werden, welches vorzugsweise durch einen Bestückungsautomat auf der Platine des Betriebsgerätes bestückt werden kann. Der Filterkondensator 75 und das Funkentstördrossel 74 oder Teile davon wie die Induktivität können auch in einem Hybridbauteil integriert sein.

Betriebsgeräte nach Ausführungsbeispielen können insbesondere zum Betreiben von Leuchten, die LEDs umfassen, eingesetzt werden, ohne darauf beschränkt zu sein.

## Patentansprüche

1. Betriebsgerät (50) für ein Leuchtmittel (42), mit:
- einem Transformator (54, 55),
- einer Primärseite (61) mit einer primärseiigen Spule (54) des Transformators,
- einer Sekundärseite (62) mit einer sekundärseitigen Spule (55) des Transformators,
- einem Funkentstörelement (59),
wobei das Funkentstörelement (59) zwischen der Primärseite und der Sekundärseite (62) angeordnet ist,
- einem Filter (73) zum Unterdrücken von Störungen, das mit dem Funkentstörelement (59) gekoppelt ist;
wobei das Filter (73) und das Funkentstörelement (59) in einer Serienschaltung angeordnet sind, und wobei diese Serienschaltung aus Filter (73) und Funkentstörelement (59) zwischen einer Masse (P1) der Primärseite (61) und einer Masse (P0) der Sekundärseite (62) angeordnet ist, **gekennzeichnet dadurch, dass** das Betriebsgerät (50) ferner einen Erdanschluß (PE) und eine Serienschaltung aus einem Filterkondensator (75) und einer Funkentstördrossel (74) aufweist, wobei die Serienschaltung aus dem Filterkondensator (75) und der Funkentstördrossel (74) zwischen dem Erdanschluß (PE) und der Masse (P0) der Sekundärseite (62) angeordnet ist.

2. Betriebsgerät nach Anspruch 1,
wobei das Filter (73) ein Element mit einer frequenzabhängigen Impedanz (80) umfasst.

3. Betriebsgerät nach einem der Ansprüche 1 bis 2,
wobei zusätzlich ein steuerbares Schaltmittel (71) vorhanden ist, das in Serie zu dem Funkentstörelement (59) und dem Filter (73) geschaltet ist.

4. Betriebsgerät nach Anspruch 3,
wobei das Betriebsgerät (50) eingerichtet ist, um das steuerbare Schaltmittel (71) betriebszustandsabhängig in einen Ein-Zustand zu schalten.

5. Betriebsgerät nach Anspruch 3 oder 4,
wobei das steuerbare Schaltmittel (71) eingerichtet ist, um durch einen Mikrocontroller (72) oder einen Spannung der Sekundärseite (62) des Betriebsgeräts (50) in einen Ein-Zustand geschaltet zu werden.

6. Betriebsgerät nach einem der Ansprüche 3 bis 5, wobei das steuerbare Schaltmittel (71) Teil einer Anti-Glimm-Einrichtung (70; 71, 72; 73) ist.

7. Betriebsgerät nach Anspruch 6, wenn Anspruch 6 vom Anspruch 2 abhängig ist, wobei das Filter (73) bei einer Versorgungsspannungsfrequenz (83) des Betriebsgeräts (50) einen größeren Betrag der Impedanz (81) aufweist als für eine Frequenz im Funkentstörbereich (84).

8. Betriebsgerät nach einem der vorhergehenden Ansprüche,
wobei das Funkentstörelement (59) ein Funkentstörkondensator ist.

9. Betriebsgerät nach Anspruch 6,
wobei die Anti-Glimm-Einrichtung (70; 71, 72; 73) auf der Sekundärseite (62) des Betriebsgeräts (50) angeordnet ist.

10. Betriebsgerät nach Anspruch 1,
wobei zwischen dem Erdanschluß (PE) und der Masse (P1) der Primärseite (61) ein Sicherheitskondensator (76) angeordnet ist.

11. Betriebsgerät nach einem der vorhergehenden Ansprüche,
wobei das Betriebsgerät (50) als LED-Konverter ausgestaltet ist.

12. Beleuchtungssystem, umfassend
ein Betriebsgerät (50) nach einem der Ansprüche 1 bis 11,
eine mit dem Betriebsgerät (50) verbundene Versorgungsquelle (10), und
ein mit dem Betriebsgerät (50) verbundenes Leuchtmittel (42).

## Claims

1. An operating device (50) for a light means (42), having:
- a transformer (54, 55),
- a primary side (61) with a primary-side coil (54) of the transformer,
- a secondary side (62) with a secondary-side coil (55) of the transformer,
- a radio interference suppression element (59),
wherein the radio interference suppression element (59) is arranged between the primary side and the secondary side (62),
- a filter (73) for suppressing interferences, that is coupled with the radio interference suppression element (59);
wherein the filter (73) and the radio interference suppression element (59) are arranged in a series circuit, and wherein said series circuit of filter (73) and radio interference suppression element (59) is arranged between a mass (P1) of the primary side (61) and a mass (P0) of the secondary side (62),
**characterized in that** the operating device (50) furthermore has a ground connection (PE) and a series circuit of the filter capacitor (75) and a radio interference suppression choke (74), wherein the series circuit of the filter capacitor (75) and the radio interference suppression choke (74) is arranged between the ground connection (PE) and the mass (P0) of the secondary side (62).

2. An operating device according to Claim 1,
wherein the filter (73) comprises an element with a frequency-dependent impedance (80).

3. An operating device according to any one of Claims 1 to 2,
wherein in addition there is a controllable switching means (71), which is connected in series to the radio interference suppression element (59) and to the filter (73).

4. An operating device according to Claim 3,
wherein the operating device (50) is configured, in order to switch the controllable switching means (71) into an on-state depending on the operating state.

5. An operating device according to Claim 3 or 4,
wherein the controllable switching means (71) is configured, in order to be switched into an on-state by a micro-controller (72) or a voltage of the secondary side (62) of the operating device (50).

6. An operating device according to any one of Claims 3 to 5,
wherein the controllable switching means (71) is part of an anti-glow discharge element (70; 71, 72; 73).

7. An operating device according to Claim 6, if Claim 6 is dependent on Claim 2,
wherein at a supply voltage frequency (83) of the operating device (50) the filter (73) has a greater amount of impedance (81) than for a frequency in the radio interference suppression range (84).

8. An operating device according to any of the preceding claims,
wherein the radio interference suppression element (59) is a radio interference suppression capacitor.

9. An operating device according to Claim 6,
wherein the anti-glow discharge element (70; 71, 72; 73) is arranged on the secondary side (62) of the operating device (50).

10. An operating device according to Claim 1,
wherein a safety capacitor (76) is arranged between the ground connection (PE) and the mass (P1) of the primary side (61).

11. An operating device according to any one of the preceding claims,
wherein the operating device (50) is designed as an LED converter.

12. A lighting system, comprising
an operating device (50) according to any one of Claims 1 to 11,
a power supply source (10) connected to the operating device (50), and a light means (42) connected to the operating device (50).

## Revendications

1. Appareil de commande (50) pour un moyen d'éclairage (42) avec :
- un transformateur (54, 55),
- un côté primaire (61) avec une bobine côté primaire (54) du transformateur,
- un côté secondaire (62) avec une bobine côté secondaire (55) du transformateur,
- un élément anti-parasites (59),
l'élément anti-parasites (59) étant disposé entre le côté primaire et le côté secondaire (62),
- un filtre (73) pour l'inhibition des parasites, qui est couplé avec l'élément anti-parasites (59) ;
le filtre (73) et l'élément anti-parasites (59) étant disposés dans un circuit en série et
ce circuit en série constitué du filtre (73) et de l'élément anti-parasites (59) étant disposé entre une masse (P1) du côté primaire (61) et une masse (P0) du côté secondaire (62),
**caractérisé en ce que** l'appareil de commande (50) comprend en outre un raccordement à la terre (PE) et un circuit en série constitué d'un condensateur de filtre (75) et d'une bobine anti-parasites (74), le circuit en série constitué du condensateur de filtre (75) et de la bobine anti-parasites (74) étant disposé entre le raccordement à la terre (PE) et la masse (P0) du côté secondaire (62).

2. Appareil de commande selon la revendication 1,
le filtre (73) comprenant un élément avec une impédance (80) dépendant de la fréquence.

3. Appareil de commande selon l'une des revendications 1 à 2,
un moyen de commutation contrôlable (71) étant en outre prévu, qui est branché en série avec l'élément anti-parasites (59) et le filtre (73).

4. Appareil de commande selon la revendication 3,
l'appareil de commande (50) étant conçu pour mettre le moyen de commutation contrôlable (71) dans un état activé en fonction d'un état de fonctionnement.

5. Appareil de commande selon la revendication 3 ou 4,
le moyen de commutation contrôlable (71) étant conçu pour être mis dans un état activé par un micro-contrôleur (72) ou une tension du côté secondaire (62) de l'appareil de commande (50).

6. Appareil de commande selon l'une des revendications 3 à 5,
le moyen de commutation contrôlable (71) faisant partie d'un dispositif anti-rougeoiement (70 ; 71, 72 ; 73).

7. Appareil de commande selon la revendication 6, lorsque la revendication 6 dépend de la revendication 2, le filtre (73) présentant, pour une fréquence de tension d'alimentation (83) de l'appareil de commande (50), une valeur d'impédance (81) supérieure à une valeur pour une fréquence dans la partie anti-parasites (84).

8. Appareil de commande selon l'une des revendications précédentes, l'élément anti-parasites (59) étant condensateur anti-parasites.

9. Appareil de commande selon la revendication 6,
le dispositif anti-rougeoiement (70 ; 71, 72 ; 73) étant disposé sur le côté secondaire (62) de l'appareil de commande (50).

10. Appareil de commande selon la revendication 1,
un condensateur de sécurité (76) étant disposé entre le raccordement à la terre (PE) et la masse (P1) du côté primaire (61).

11. Appareil de commande selon l'une des revendications précédentes, l'appareil de commande (50) étant conçu comme un convertisseur LED.

12. Système d'éclairage comprenant
un appareil de commande (50) selon l'une des revendications 1 à 11,
une source d'alimentation (10) reliée à l'appareil de commande (50) et
un moyen d'éclairage (42) relié à l'appareil de commande (50).
